# FASCICULE DE BREVET EUROPEEN

(11) **EP 1 240 417 B1**
(45) Date de publication et mention de la délivrance du brevet: **08.03.2006**
(21) Numéro de dépôt: 00988946.0
(22) Date de dépôt: 18.12.2000
(51) Int. Cl.: F02C 9/28

(54) **DISPOSITIF ET PROCEDE DE REGULATION DE LA PUISSANCE D'UN GROUPE MOTOPROPULSEUR D'ENTRAINEMENT DE ROTOR D'HELICOPTERE**
VERFAHREN UND VORRICHTUNG ZUR LEISTUNGSREGELUNG EINER HUBSCHRAUBER-ROTOR-ANTRIEBSEINHEIT
DEVICE AND METHOD FOR ADJUSTING THE POWER OF A POWER PACK DRIVING A HELICOPTER ROTOR

(30) Priorité: 23.12.1999 FR 9916392
(43) Date de publication de la demande: 18.09.2002
(73) Titulaire: Turbomeca, 64511 Bordes Cedex (FR)
(72) Inventeur: NOUSSITOU, Christian, Pierre, F-64360 Cuqueron (FR); MARIN, Jean-Philippe Jacques, 64000 Pau (FR)
(74) Mandataire: Casalonga, Axel
(86) Numéro de dépôt international: PCT/FR2000/003571
(87) Numéro de publication internationale: WO 2001/048574

(56) Documents cités:
- US-A- 4 423 593
- US-A- 4 466 526
- US-A- 4 648 797
- US-A- 5 046 923
- US-A- 5 775 089
- US-A- 5 812 428

## Description

La présente invention a pour objet un dispositif de régulation de la puissance d'un groupe motopropulseur d'entraînement de rotor d'hélicoptère, permettant plus particulièrement une assistance au pilotage en mode de secours en cas de panne du système de régulation principal de la vitesse de rotation du rotor de l'hélicoptère.

La présente invention a également pour objet un procédé de régulation utilisé en cas de panne du système de régulation principal.

Les turbomoteurs d'hélicoptères sont équipés d'un système de régulation qui remplit une pluralité de fonctions plus ou moins complexes. La fonction principale du système de régulation est néanmoins de réguler en vol la puissance délivrée par le turbomoteur afin de maintenir la vitesse de rotation du rotor de l'hélicoptère à une valeur sensiblement constante.

Les systèmes de régulation que l'on rencontre fréquemment aujourd'hui sont des systèmes de régulation électronique munis d'un dispositif de secours manuel.

En fonctionnement nominal, la régulation est gérée par un calculateur électronique qui reçoit des signaux provenant de différents capteurs et commande différents actionneurs pour réguler automatiquement la puissance délivrée par le moteur. En cas de panne affectant le système de régulation électronique et mettant le calculateur dans l'incapacité de réguler la puissance délivrée par le moteur, le pilote de l'hélicoptère doit, au moyen d'un dispositif manuel de secours, ajuster manuellement la puissance délivrée par le turbomoteur en fonction des besoins engendrés par les manoeuvres de l'hélicoptère (mise de pas, baisse de pas, atterrissage, etc.). La charge de pilotage s'en trouve sensiblement accrue. En effet, le pilote doit régler manuellement à chaque instant le débit du carburant alimentant le turbomoteur. Cela est particulièrement contraignant sur un hélicoptère monomoteur, toute manoeuvre de l'hélicoptère nécessitant un ajustement manuel spécifique du débit du carburant.

Il faut donc que le pilote soit correctement entraîné à cette situation particulière. Mais, de façon à diminuer les risques pouvant résulter d'un entraînement insuffisant du pilote, le constructeur du turbomoteur est amené à garantir un taux de panne extrêmement faible pour le système de régulation principal, ce qui entraîne une plus grande complexité et donc un renchérissement de l'ensemble du système de régulation.

La présente invention a pour objet un dispositif simple, de faible coût, permettant d'améliorer la régulation de puissance du groupe motopropulseur en cas de panne du système de régulation principal et de faciliter le pilotage en mode secours.

La présente invention a également pour objet un dispositif de régulation augmentant la sécurité en cas de panne et de réalisation peu onéreuse.

Le dispositif de régulation de la puissance d'un groupe motopropulseur d'entraînement de rotor d'hélicoptère, en cas de panne du système de régulation principal, selon l'invention, comprend un moyen de dosage du débit de carburant, un dispositif électronique de commande comportant un moyen d'acquisition d'un signal d'entrée correspondant à la vitesse de rotation du rotor (NP), un moyen de traitement dudit signal d'entrée comportant un élément dérivateur et un élément sommateur, ainsi qu' un comparateur à seuil recevant le signal de sortie dudit moyen de traitement. Un dispositif actionneur recoit le signal de sortie du dispositif électronique de commande et actionne de manière progressive le moyen de dosage du débit de carburant dans le sens d'une augmentation de débit, d'une diminution de débit ou d'un maintien inchangé du débit.

Un tel dispositif est particulièrement simple, facile à installer et à utiliser, du fait qu'il n'utilise aucune commande manuelle, supprimant ainsi toute manette, tringlerie, renvoi d'angle, etc... En cas de panne du système de régulation principal, le pilote de l'hélicoptère n'est plus obligé de piloter manuellement le débit de carburant qui est automatiquement commandé.

Le pilotage de l'hélicoptère, en cas de panne du système de régulation principal, est largement facilité par rapport à un pilotage de secours avec ajustement manuel de la puissance. Le pilote doit simplement en effet, adopter un pilotage doux, sans manoeuvre brusque et veiller à respecter les limites de régime maximum du moteur ainsi que les limites de couple et de vitesse du rotor de l'hélicoptère. Le pilote n'a plus à se préoccuper du débit de carburant qui est automatiquement contrôlé par le dispositif de l'invention. En particulier, le pilote n'a plus à ajuster manuellement à chaque instant le débit de carburant pour l'adapter aux besoins de puissance engendrés par les manoeuvres de l'hélicoptère comme par exemple, mises de pas, baisses de pas, atterrissage, etc...

Dans un mode de réalisation avantageux, le dispositif actionneur est un dispositif électrique et le dispositif électronique de commande inclut en outre un moyen d'alimentation électrique du dispositif actionneur.

Un filtre passe-bas peut être prévu pour effectuer un filtrage du signal d'entrée.

Le comparateur comporte de préférence un seuil haut et un seuil bas prédéterminés.

Le dispositif actionneur est de préférence conçu de façon à agir à vitesse relativement lente et comporte avantageusement une butée de position minimum. De cette manière, un effet d'intégration du signal est automatiquement obtenu. De plus, la limitation de la vitesse de variation du débit de carburant qui en résulte permet d'accélérer le moteur sans risque de pompage. De même, la butée de position minimum permet de décélérer le moteur sans risque d'extinction.

Le dispositif actionneur peut être par exemple un moteur à courant continu dont la vitesse de rotation est constante pour une tension d'alimentation déterminée, ou encore un moteur pas à pas.

Le moyen de dosage du débit de carburant peut comprendre un doseur auxiliaire de carburant coopérant avec un doseur principal, doseur auxiliaire agissant en parallèle du doseur principal pour ajouter du débit au débit existant au moment de la panne et agissant en série du doseur principal pour enlever du débit. En variante, le moyen de dosage peut être un organe de dosage unique commandé par un moteur pas à pas à double entrée, l'une actionnée par le système de régulation principal et l'autre actionnée par le dispositif de l'invention, en cas de panne du système de régulation principal.

L'invention est particulièrement adaptée au cas où le groupe motopropulseur est un turbomoteur.

L'invention concerne également, d'une manière plus générale, un procédé de régulation de la puissance d'un groupe motopropulseur d'entraînement de rotor d'hélicoptère en cas de panne du système de régulation principal, dans lequel on commande automatiquement l'augmentation ou la diminution du débit de carburant fourni au groupe motopropulseur, par rapport au débit au moment de la panne, en fonction de la vitesse de rotation du rotor (NP).

L'utilisation comme seul signal d'entrée de la vitesse de rotation du rotor permet la mise en oeuvre du procédé de l'invention par des moyens particulièrement simples et peu onéreux.

L'invention sera mieux comprise à l'étude d'un mode de réalisation particulier pris à titre d'exemple et illustré par les dessins annexés, sur lesquels :
- la figure 1 est un schéma fonctionnel illustrant le principe général d'un dispositif selon l'invention; et
- la figure 2 est un schéma fonctionnel montrant un exemple de réalisation d'un dispositif selon l'invention.

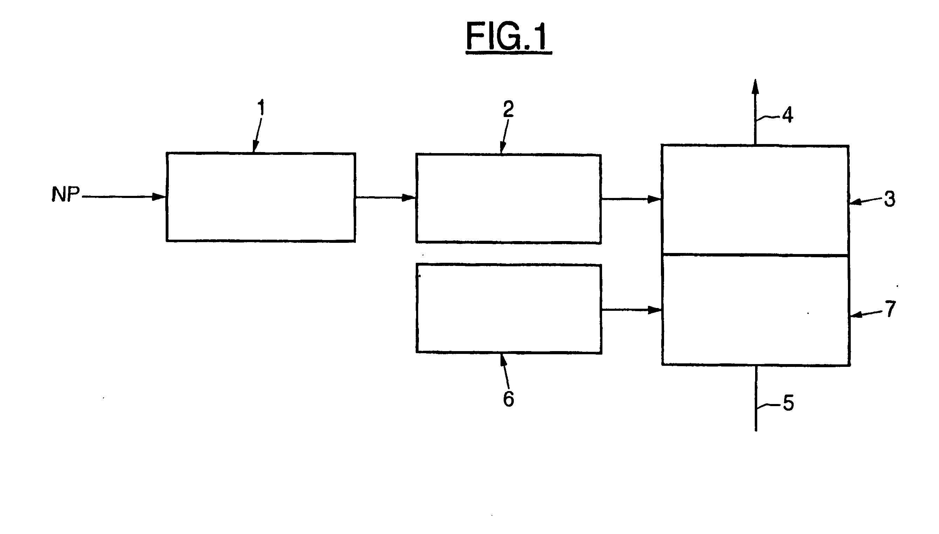

Un dispositif de régulation de puissance d'un groupe motopropulseur d'entraînement d'un rotor d'hélicoptère selon la présente invention, tel qu'il est illustré sur la figure 1, comprend un dispositif électronique de commande 1 recevant un signal d'entrée NP correspondant à la vitesse de rotation du rotor. Le dispositif électronique de commande est relié à un dispositif actionneur 2 qui reçoit le signal de sortie du dispositif électronique de commande 1 et qui actionne de manière progressive un moyen 3 de dosage du débit de carburant, ce carburant étant ensuite délivré au motopropulseur d'entraînement du rotor par la canalisation schématisée en 4, le carburant étant alimenté à partir d'un réservoir non illustré, par une canalisation schématisée par la référence 5. L'actionneur 2 permet d'obtenir, par le moyen de dosage 3, une augmentation progressive ou une diminution progressive du débit de carburant, selon le signal reçu du dispositif électronique de commande 1.

Le dispositif électronique de commande 1 et le dispositif actionneur 2 associé au moyen de dosage 3, constituent l'ensemble du dispositif de secours capable, selon l'invention, de commander le débit de carburant fourni au motopropulseur, par exemple un turbomoteur, de façon à ajouter ou enlever du débit de carburant par rapport au débit de carburant préexistant au moment où une panne est survenue.

La figure 1 représente également schématiquement le système de régulation principal alimentant le turbomoteur en carburant en fonctionnement nominal, c'est-à-dire en l'absence de panne. Dans ce cas, le système de régulation principal 6 agit sur un moyen de dosage principal 7 pour fournir au turbomoteur, par la canalisation 4, un débit de carburant adapté à chaque instant aux conditions de vol de l'hélicoptère.

Comme on le sait, le système de régulation principal permet, en vol, de réguler la puissance délivrée par le moteur afin de maintenir la vitesse de rotation du rotor de l'hélicoptère à une valeur sensiblement constante. Le dispositif de régulation de puissance de l'invention permet de suppléer la défaillance du système de régulation principal 6 en cas de panne de ce dernier, sans que le pilote soit obligé de procéder à un ajustement manuel particulièrement délicat.

Dans le mode de réalisation illustré sur la figure 1, le moyen de dosage de carburant 3 est distinct du moyen de dosage principal 7. Le moyen de dosage 3 agit en parallèle du moyen de dosage principal 7 pour ajouter du débit de carburant et en série par rapport au moyen de dosage principal 7 pour diminuer le débit par rapport au débit de carburant existant au moment de la panne.

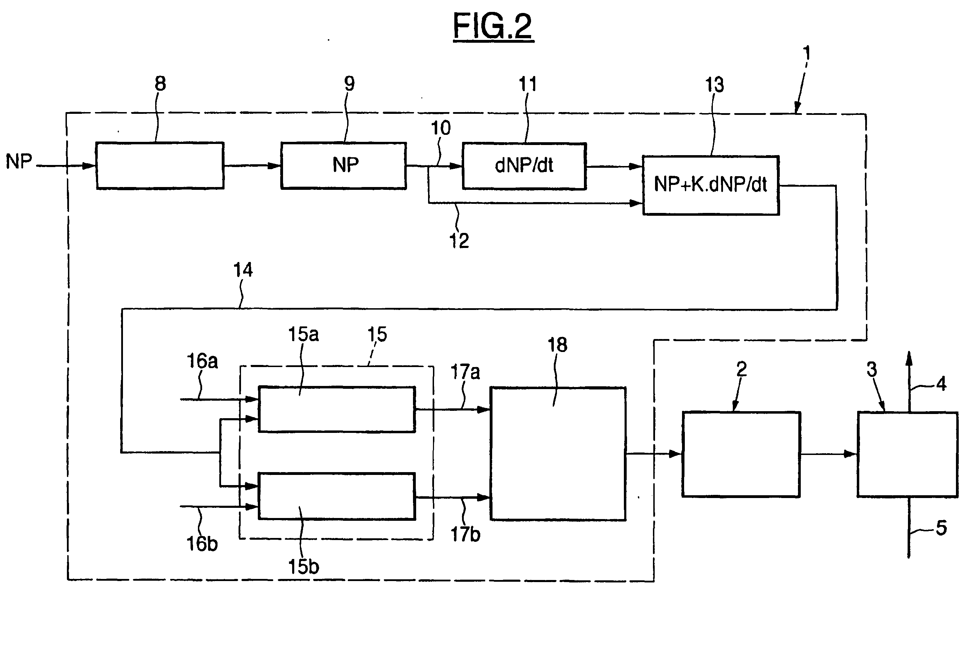

Dans le mode de réalisation illustré sur la figure 2, on retrouve le dispositif électronique de commande 1 recevant comme signal d'entrée unique un signal NP correspondant à la vitesse de rotation du rotor. Le dispositif électronique 1 comprend un moyen d'acquisition 8 du signal NP suivi d'un dispositif de filtrage 9, par exemple sous la forme d'un filtre passe-bas. Le signal de sortie du filtre 9 est envoyé par la connexion 10 à un élément dérivateur 11 et par la connexion 12 à un dispositif sommateur 13. Le signal de sortie du sommateur 13 est donc de la forme NP+K.dNP/dt. Ce signal est transmis par la connexion 14 à un comparateur à seuil 15 comportant un élément comparateur à seuil haut 15a et un élément comparateur à seuil bas 15b. Les valeurs respectives de seuil haut et de seuil bas sont amenées aux comparateurs 15a et 15b par les connexions 16a, 16b.

Le comparateur à seuil 15 compare donc le signal NP+K.dNP/dt à un seuil haut et à un seuil bas. Le comparateur 15 émet un signal de sortie sur l'une de ses sorties 17a, 17b reliée à un dispositif 18 d'alimentation électrique commandant le dispositif actionneur 2. La commande de l'actionneur 2 se fait donc en tout ou rien dans le sens d'une augmentation du débit de carburant si NP+K.dNP/dt est inférieur au seuil bas ou dans le sens d'une diminution de débit de carburant si NP+K.dNP/dt est supérieur au seuil haut. En l'absence de signal émis par le comparateur 15, c'est-à-dire lorsque le signal NP+K.dNP/dt se situe entre les seuils haut et bas, l'actionneur 2 n'agit pas et le débit de carburant reste inchangé.

Ainsi, le dispositif de l'invention agit pour maintenir la valeur du signal NP entre le seuil bas et le seuil haut prédéterminés, ce qui revient à maintenir la vitesse de rotation du rotor de l'hélicoptère entre deux seuils également prédéterminés.

Le terme dérivé "K.dNP/dt" permet d'anticiper la commande du dispositif actionneur 2 dès qu'une variation du besoin en puissance provoque une variation de la vitesse de rotation du rotor de l'hélicoptère et donc du signal NP.

Le dispositif actionneur électrique 2 se déplace de préférence à vitesse relativement lente. De plus, il comprend avantageusement une butée de position minimum. De cette manière, on obtient, comme précédemment indiqué, une limitation de la vitesse de variation du débit du carburant et une limitation du débit de carburant en valeur basse, permettant ainsi une accélération du turbomoteur sans risque de pompage et une décélération sans risque d'extinction.

Le dispositif actionneur électrique 2 peut être un moteur à courant continu ou un moteur pas à pas, assurant une vitesse de déplacement relativement lente.

Le dispositif 18 d'alimentation électrique du dispositif actionneur 2 peut, soit commander une vitesse de déplacement constante, soit commander une vitesse de déplacement dépendant du signal NP et du sens de déplacement.

L'ensemble du dispositif électronique de commande 1 peut être réalisé de plusieurs manières. C'est ainsi qu'il est possible d'utiliser des amplificateurs opérationnels permettant la réalisation d'un dispositif électronique analogique. Il est également possible d'utiliser des composants numériques programmables du type EPLD, des composants développés spécifiquement du type ASIC ou même d'utiliser un microprocesseur commandé par un logiciel permettant d'obtenir les fonctions qui viennent d'être décrites.

Le dispositif électronique de commande 1 peut être intégré dans un boîtier spécifique correspondant au fonctionnement de secours de la régulation ou au contraire être intégré dans un boîtier réalisant par ailleurs d'autres fonctions de l'hélicoptère.

Le dispositif de régulation de l'invention permet, avec un faible surcoût de production, d'offrir un mode de fonctionnement de secours en cas de panne du système de régulation principal dont l'utilisation par le pilote est beaucoup plus facile et plus sure que celle d'un dispositif de secours purement manuel.

En cas de panne du système de régulation principal, le dispositif de l'invention commande automatiquement l'augmentation ou la diminution du débit de carburant fourni au groupe motopropulseur par rapport au débit existant au moment de la panne, et ce en fonction uniquement de la vitesse de rotation du rotor de l'hélicoptère. La charge de pilotage qui en résulte est bien moindre que celle résultant de l'utilisation d'un dispositif de secours manuel, de type classique. En effet, grâce au dispositif de régulation de l'invention, le pilote doit simplement adopter un pilotage doux et veiller à respecter des limites de fonctionnement tenant à la fois au moteur et au vol de l'hélicoptère. Le débit du carburant est automatiquement contrôlé par le dispositif de régulation de l'invention.

Cette simplification est particulièrement notable sur un hélicoptère monomoteur, dans lequel toute manoeuvre de l'hélicoptère nécessite un ajustement manuel du débit de carburant.

Le dispositif de l'invention augmente donc la sécurité, puisqu'il nécessite moins de dextérité de la part du pilote. D'autre part, grâce au dispositif de l'invention, il n'est plus nécessaire de procéder à un entraînement spécifique du pilote à un pilotage en mode de secours, ce qui présente un intérêt économique important pour l'opérateur.

Le dispositif de l'invention peut permettre également de réduire les contraintes de fiabilité, de sécurité et de disponibilité du système de régulation principal. En effet, le fait de disposer d'un mode de fonctionnement de secours fiable et facilement pilotable en cas de panne, permet d'accepter une augmentation du taux de pannes acceptable du système de régulation principal.

Le dispositif de l'invention est particulièrement adapté aux turbomoteurs montés sur des hélicoptères monomoteurs, en raison de l'importance du gain en matière de facilité d'emploi pour le pilote par rapport à un dispositif de secours purement manuel. De plus, le dispositif de l'invention permet dans ce cas une diminution des coûts de production, les dispositifs de secours manuels nécessitant un dispositif de commande à poignée tournante de fabrication complexe et de coût important.

Le dispositif de l'invention peut également être utilisé sur des hélicoptères bimoteurs. Dans ce cas, il peut être nécessaire, pour éviter des déséquilibres de charge trop importants entre les deux moteurs, de prévoir une adaptation automatique des lois de régulation du moteur restant en fonctionnement normal lorsque l'autre moteur passe en mode de fonctionnement de secours.

La réalisation du dispositif de l'invention est particulièrement simple du fait qu'un seul paramètre est utilisé en entrée, à savoir la vitesse de rotation du rotor, que la fonction de calcul nécessaire est simple (comparaison de la somme du signal vitesse et de sa dérivée à deux seuils prédéfinis) et qu'un actionneur électrique est utilisé pour commander en tout ou rien une augmentation de débit de carburant, une diminution de débit ou un maintien inchangé du débit de carburant.

## Revendications

1. Dispositif de régulation de la puissance d'un groupe motopropulseur d'entraînement de rotor d'hélicoptère en cas de panne du système de régulation principal, comprenant un moyen de dosage du débit de carburant, un dispositif électronique de commande (1) comportant un moyen (8) d'acquisition d'un signal d'entrée correspondant à la vitesse de rotation du rotor (NP), un moyen de traitement dudit signal d'entrée comportant un élément dérivateur (11) et un élément sommateur (13), **caractérisé par le fait que** l'élément sommateur est monté de façon à réaliser la somme du signal de vitesse de rotation (NP) et de sa dérivée (K.dNP/dt) et qu'un comparateur à seuil (15) reçoit le signal de sortie dudit élément sommateur et émet un signal de sortie vers un dispositif actionneur (2) capable d'agir progressivement sur le moyen (3) de dosage du débit de carburant dans le sens d'une augmentation ou d'une diminution de débit.

2. Dispositif de régulation selon la revendication 1 **caractérisé par le fait que** le dispositif actionneur est un dispositif électrique et que le dispositif électronique de commande inclut en outre un moyen (18) d'alimentation électrique du dispositif actionneur.

3. Dispositif de régulation selon l'une quelconque des revendications précédentes **caractérisé par le fait qu'**un filtre passe-bas (9) effectue un filtrage du signal d'entrée.

4. Dispositif de régulation selon l'une quelconque des revendications précédentes **caractérisé par le fait que** le comparateur comporte un seuil haut (15a) et un seuil bas (15b).

5. Dispositif de régulation selon l'une quelconque des revendications précédentes **caractérisé par le fait que** le dispositif actionneur agit à vitesse relativement lente et comporte une butée de position minimum.

6. Dispositif de régulation selon la revendication 5 **caractérisé par le fait que** le dispositif actionneur est un moteur à courant continu dont la vitesse de rotation est constante pour une tension d'alimentation déterminée.

7. Dispositif de régulation selon la revendication 5 **caractérisé par le fait que** le dispositif actionneur est un moteur pas à pas.

8. Dispositif de régulation selon l'une quelconque des revendications précédentes **caractérisé par le fait que** le moyen de dosage du débit de carburant comprend un doseur auxiliaire (3) de carburant agissant en parallèle d'un doseur principal (7) de carburant.

9. Dispositif de régulation selon l'une quelconque des revendications précédentes **caractérisé par le fait que** le groupe motopropulseur est un turbomoteur.

10. Procédé de régulation de la puissance d'un groupe motopropulseur d'entrainement de rotor d'hélicoptère en cas de panne du système de régulation principal, **caractérisé par le fait qu'**on commande automatiquement l'augmentation ou la diminution du débit de carburant fourni au groupe motopropulseur, par rapport au débit au moment de la panne, en fonction de la vitesse de rotation du rotor (NP).

11. Hélicoptère comportant un groupe motopropulseur d'entraînement de son rotor et un système de régulation principal alimentant le groupe motopropulseur par l'intermédiaire d'un moyen de dosage du débit de carburant, **caractérisé par le fait qu'**il est équipé d'un dispositif de secours en cas de panne du système de régulation principal selon l'une des revendications 1 à 9 et comprenant : un dispositif électronique de commande (1) comportant un moyen (8) d'acquisition d'un signal d'entrée correspondant à la vitesse de rotation du rotor (NP), un moyen de traitement dudit signal d'entrée comportant un élément dérivateur (11) et un élément sommateur monté de façon à réaliser la somme du signal de vitesse de rotation (NP) et de sa dérivée (K.dNP/dt) et un comparateur à seuil recevant le signal de sortie dudit élément sommateur et émettant un signal de sortie vers un dispositif actionneur (2) capable d'agir sur le moyen (3) de dosage du débit de carburant, dans le sens d'une augmentation, d'une diminution ou d'un maintien du débit.

## Patentansprüche

1. Vorrichtung zur Leistungsregelung eines Triebwerks für den Antrieb eines Hubschrauberrotors bei einem Ausfall des Hauptregelsystems, die eine Einrichtung zur Dosierung der Treibstoffzufuhr und eine elektronische Steuervorrichtung (1) mit einer Einrichtung (8) zur Erfassung eines Eingangssignals entsprechend der Drehgeschwindigkeit des Rotors (NP) und mit einer Einrichtung zur Verarbeitung des Eingangssignals aufweist, die ein Differenzierelement (11) und ein Summierelement (13) enthält, **dadurch gekennzeichnet, dass** das Summierelement so angeordnet ist, dass es die Summe aus dem Drehgeschwindigkeitssignal (NP) und seinem Differenzquotienten (K.dNP/dt) bildet, und dass ein Schwellenkomparator (15) das Ausgangssignal des Summierelements empfängt und ein Ausgangssignal an eine Stellvorrichtung (2) sendet, die in der Lage ist, progressiv auf die Einrichtung (3) zur Dosierung der Treibstoffzufuhr in Richtung einer Erhöhung oder einer Verringerung der Zufuhrmenge einzuwirken.

2. Regelvorrichtung nach Anspruch 1, **dadurch gekennzeichnet, dass** die Stellvorrichtung eine elektrische Vorrichtung ist, und dass die elektronische Steuervorrichtung außerdem eine Einrichtung (18) zur Stromversorgung der Stellvorrichtung aufweist.

3. Regelvorrichtung nach einem der vorhergehenden Ansprüche, **dadurch gekennzeichnet, dass** ein Tiefpassfilter (9) eine Filterung des Eingangssignals durchführt.

4. Regelvorrichtung nach einem der vorhergehenden Ansprüche, **dadurch gekennzeichnet, dass** der Komparator eine obere Schwelle (15a) und eine untere Schwelle (15b) aufweist.

5. Regelvorrichtung nach einem der vorhergehenden Ansprüche, **dadurch gekennzeichnet, dass** die Stellvorrichtung bei relativ langsamer Geschwindigkeit wirkt und einen unteren Positionsanschlag aufweist.

6. Regelvorrichtung nach Anspruch 5, **dadurch gekennzeichnet, dass** die Stellvorrichtung ein Gleichstrommotor ist, dessen Drehgeschwindigkeit bei einer bestimmten Speisespannung konstant ist.

7. Regelvorrichtung nach Anspruch 5, **dadurch gekennzeichnet, dass** die Stellvorrichtung ein Schrittschaltmotor ist.

8. Regelvorrichtung nach einem der vorhergehenden Ansprüche, **dadurch gekennzeichnet, dass** die Einrichtung zur Dosierung der Treibstoffzufuhr einen Treibstoff-Hilfsdosierer (3) aufweist, der parallel zu einem Treibstoff-Hauptdosierer (7) wirkt.

9. Regelvorrichtung nach einem der vorhergehenden Ansprüche, **dadurch gekennzeichnet, dass** das Triebwerk ein Turbomotor ist.

10. Verfahren zur Leistungsregelung eines Triebwerks für den Antrieb eines Hubschrauberrotors bei einem Ausfall des Hauptregelsystems, **dadurch gekennzeichnet, dass** die Erhöhung oder die Verringerung der an das Triebwerk gelieferten Treibstoffmenge bezüglich der Menge zum Zeitpunkt des Ausfalls in Abhängigkeit von der Drehgeschwindigkeit des Rotors (NP) automatisch gesteuert wird.

11. Hubschrauber mit einem Triebwerk für den Antrieb seines Rotors und mit einem Hauptregelsystem, das das Triebwerk über eine Einrichtung zur Dosierung der Treibzufuhr speist, **dadurch gekennzeichnet, dass** er mit einer Hilfsvorrichtung für den Fall eines Ausfalls des Hauptregelsystems gemäß einem der Ansprüche 1 bis 9 ausgestattet ist, die eine elektronische Steuervorrichtung (1) mit einer Einrichtung (8) zur Erfassung eines Eingangssignals entsprechend der Drehgeschwindigkeit des Rotors (NP), mit einer Einrichtung zur Verarbeitung des Eingangssignals, die ein Differenzierelement (11) und ein Summierelement enthält, das so angeordnet ist, dass es die Summe aus dem Drehgeschwindigkeitssignal (NP) und seinem Differenzquotienten (K.dNP/dt) bildet, und mit einem Schwellenkomparator aufweist, der das Ausgangssignal des Summierelements empfängt und ein Ausgangssignal an eine Stellvorrichtung (2) sendet, die in der Lage ist, auf die Einrichtung (3) zur Dosierung der Treibstoffzufuhr in Richtung einer Erhöhung, einer Verringerung oder einer Beibehaltung der Zufuhrmenge einzuwirken.

## Claims

1. Device for adjusting the power of a power pack driving a helicopter rotor in the event of a failure of the main adjusting system, comprising a means of dosing the fuel feed rate, an electronic control device (1) comprising a means (8) of acquisition of an input signal corresponding to the speed of rotation of the rotor (NP), a means of processing said input signal comprising a differentiator element (11) and a summator element (13), **characterized in that** the summator element is arranged in such a way as to sum the speed-of-rotation signal (NP) and its derivative (k.dNP/dt) and that a threshold-based comparator (15) receives the output signal from said summator element and emits an output signal to an actuator device (2) capable of acting progressively on the means (3) of dosing the fuel feed rate in the direction of an increase or of a decrease in feed rate.

2. Adjusting device according to Claim 1, **characterized in that** the actuator device is an electric device and that the electronic control device furthermore includes a means (18) of electrical supply of the actuator device.

3. Adjusting device according to either of the preceding claims, **characterized in that** a low-pass filter (9) performs a filtering of the input signal.

4. Adjusting device according to any one of the preceding claims, **characterized in that** the comparator comprises a high threshold (15a) and a low threshold (15b).

5. Adjusting device according to any one of the preceding claims, **characterized in that** the actuator device acts at relatively low speed and comprises a minimum position stop.

6. Adjusting device according to Claim 5, **characterized in that** the actuator device is a DC motor whose speed of rotation is constant for a specified supply voltage.

7. Adjusting device according to Claim 5, **characterized in that** the actuator device is a stepper motor.

8. Adjusting device according to any one of the preceding claims, **characterized in that** the means of dosing the fuel feed rate comprises an auxiliary doser (3) of fuel acting in parallel with a main doser (7) of fuel.

9. Adjusting device according to any one of the preceding claims, **characterized in that** the power pack is a turboengine.

10. Method for adjusting the power of a power pack driving a helicopter rotor in the event of a failure of the main adjusting system, **characterized in that** the increasing or the decreasing of the fuel feed rate to the power pack is controlled automatically with respect to the feed rate at the moment of the failure, as a function of the speed of rotation of the rotor (NP).

11. Helicopter comprising a power pack driving its rotor and a main adjusting system supplying the power pack by way of a means for dosing the fuel feed rate, **characterized in that** it is equipped with an emergency device for backup in the event of a failure of the main adjusting system according to one of Claim 1 to 9, and comprising: an electronic control device (1) comprising a means (8) of acquisition of an input signal corresponding to the speed of rotation of the rotor (NP), a means of processing said input signal comprising a differentiator element (11) and a summator element arranged in such a way as to sum the speed-of-rotation signal (NP) and its derivative (k.dNP/dt) and a threshold-based comparator receiving the output signal from said summator element and emitting an output signal to an actuator device (2) capable of acting on the means (3) of dosing the fuel feed rate in the direction of an increase, of a decrease or of a maintenance of the feed rate.
